Europäisches Patentamt

European Patent Office

Office européen des brevets

(11) Veröffentlichungsnummer : **0 070 849**
**B1**

# (12) EUROPÄISCHE PATENTSCHRIFT

(45) Veröffentlichungstag der Patentschrift :
13.04.88

(21) Anmeldenummer : 82900363.1

(22) Anmeldetag : 03.02.82

(86) Internationale Anmeldenummer :
PCT/EP 82/00019

(87) Internationale Veröffentlichungsnummer :
WO/82027 (19.08.82 Gazettee 82/20)

(51) Int. Cl.⁴ : C 03 C 11/00

(54) PORÖSER FORMKÖRPER AUS EINER GESINTERTEN GLASIGEN UND/ODER GLASIG-KRISTALLINEN MASSE,UND VERFAHREN ZUR HERSTELLUNG EINES SOLCHEN PORÖSEN FORMKÖRPERS.

(30) Priorität : 04.02.81 DE 3103749
04.02.81 DE 3103751

(43) Veröffentlichungstag der Anmeldung :
09.02.83 Patentblatt 83/06

(45) Bekanntmachung des Hinweises auf die Patenterteilung : 13.04.88 Patentblatt 88/15

(84) Benannte Vertragsstaaten :
BE CH FR GB LI NL

(56) Entgegenhaltungen :
AU-D-  206 966
DE-A- 2 020 327
DE-A- 2 328 610
FR-A- 2 417 481
GB-A-  539 629
GB-A- 1 461 509
US-A- 3 880 969
US-A- 4 018 612
Die Akte enthält technische Angaben, die nach dem
Eingang der Anmeldung eingereicht wurden und die
nicht in dieser Patentschrift enthalten sind.

(73) Patentinhaber : Schott Glaswerke
Hattenbergstrasse 10
D-6500 Mainz (DE)
BE CH FR GB LI NL
CARL-ZEISS-STIFTUNG
Schott Glaswerke Hattenbergstrasse 10
D-6500 Mainz 1 (DE)
GB

(72) Erfinder : KIEFER, Werner
Jupiterweg 19
D-6500 Mainz (DE)
Erfinder : SURA, Maria
Hermannstrasse 3
D-6507 Ingelheim (DE)

(74) Vertreter : Schmitz, Waldemar, Dipl.-Ing. et al
Schmitz + Rasper, Patentanwälte Lessingstrasse 10
D-6200 Wiesbaden (DE)

## Beschreibung

Die Erfindung betrifft ein Verfahren zur Herstellung von porösem Glas und/oder poröser Glaskeramik mit offenen Poren, die mehr als 90 % der Poren betragen, und mit einer Dichte < 1,0 g/cm$^3$. Die Erfindung betrifft zugleich einen nach diesem Verfahren hergestellten Formkörper.

Es ist eine Reihe von porösen und aufgeschäumten Formkörpern aus glasigen und/oder kristallinen Massen bekannt. Ein großer Teil dieser Produkte wird für Zwecke der Wärmeisolation eingesetzt. Daher besitzen viele dieser Produkte geschlossene Poren, um einen direkten Luftdurchgang zu verhindern. Andere Produkte, wie z.B. Filterplatten, weisen zwar offene Zwischenräume auf, besitzen aber keine so geringe Dichte und keine Poren genau vorgegebener Größe, sondern eine bestimmte Porengrößenverteilung. Es sind auch ausgelaugte Gläser mit offenen Kanälen bekannt, die aber ebenfalls eine höhere Dichte aufweisen.

Desgleichen ist eine Reihe von Verfahren zur Herstellung von porösen Körpern bekannt. Eine Gruppe von Verfahren befaßt sich mit der Herstellung von Schaumkörpern, wie z.B. Schaumglas und Schaumglaskeramik. Bei diesen Verfahren werden die Poren bei einem Aufschäumprozeß meist bei sehr hohen Temperaturen erzeugt. Je nach dem angewandten Verfahren ist dabei immer ein mehr oder weniger großer Anteil der Poren geschlossen.

Eine weitere Gruppe von Verfahren befaßt sich mit der Herstellung von Filterplatten, die offene Poren unterschiedlicher Größe besitzen. Bei diesen Verfahren werden die unterschiedlichen Porengrößen durch Sinterung von Glas oder Keramikpulver verschiedener Korngröße erzielt. Hierbei können jedoch keine sehr niedrigen Dichten erreicht werden.

Poröse Gläser lassen sich auch durch Auslaugen entmischter Gläser erzeugen, jedoch können auch hier mit vertretbaren Kosten keine niedrigen Dichten erzielt werden.

Für bestimmte Produkte ist es jedoch nötig, daß die Poren der porösen Körper offen sind, d.h., daß sie mit der Außenluft und untereinander in Verbindung stehen, und daß die porösen Körper gleichzeitig eine geringe Dichte besitzen. Zum Beispiel wird für einen Spiegelträger für den Weltraum eine poröse Glaskeramik benötigt, die offene Poren und eine möglichst geringe Dichte, vorzugsweise ≤ 0,3 g/cm$^3$ besitzt. Zusätzlich soll diese poröse Glaskeramik noch eine möglichst geringe Wärmeausdehnung, vorzugsweise um Null, und eine über den gesamten Körper vollständig gleichmäßige Porenverteilung bei ausreichender mechanischer Festigkeit besitzen. Die Offenporigkeit wird benötigt, da die in den Poren eingeschlossene Luft im Vakuum eine Längenänderung hervorrufen würde.

Aus der GB-A-1 461 509 ist ein Verfahren zur Herstellung eines Formkörpers bekannt, bei dem ein Stützgerüst aus Styroporkugeln gleichmäßiger Größe vorgefertigt wird, indem die Kugelschüttung mit Hilfe eines entsprechenden Lösungsmittels o.ä., fest verbunden wird. Dies bedeutet, daß die einzelnen Kugeln an den Berührungsflächen miteinander verbunden sein müssen, wodurch nur eine geringe mechanische Stabilität erreicht wird.

Das zu versinternde Pulver wird in Form eines Gießschlickers (suspendiert in Flüssigkeit) in das Stützgerüst gegossen, danach getrocknet und versintert, wobei das Stützgerüst rückstandslos verbrennt. Die zur Suspendierung notwendige hohe Flüssigkeitsmenge verursacht eine erhöhte Trocken- und Brennschwindung und führt somit zu festigkeitsmindernden Schrumpfrissen.

Die FR-A-24 17 481 beschreibt die Herstellung eines feinstporigen Materials durch Versintern von feinstdisperger amorpher Kieselsäure mit Kohlepulver.

Die Verwendung von Kohlenstoffpartikeln hat die Nachteile, daß beim Ausbrennen sehr viel Sauerstoff benötigt wird und daß ein vollständiges Ausbrennen nicht möglich ist.

Dieses bekannte Verfahren ist nur für amorphe Kieselsäure anwendbar und es können nur sehr feinporige Materialien hergestellt werden, die zwar eine geringe Dichte, aber keine ausreichende Festigkeit aufweisen.

Ziel der Erfindung ist daher ein Verfahren, welches es ermöglicht, die gleichzeitige Forderung nach Offenporigkeit, gleichmäßiger Porenverteilung geringer Dichte und ausreichender mechanischer Stabilität zu erfüllen.

Ein weiteres Ziel der Erfindung ist ein Formkörper mit geringer Dichte, der gleichzeitig offene Poren mit gleichmäßiger Porenverteilung sowie eine größere Festigkeit als bekannte Formkörper aufweist.

Dieses Ziel wird mit einem Verfahren erreicht, bei dem feingemahlenes sinterfähiges Pulver aus gemahlenem Glas, leicht kristallisierendem Keimbildner enthaltenden Glas, keramisierter Glaskeramik oder Mischungen dieser Stoffe, mit aufgeschäumten Kunststoffkugeln, deren Durchmesser dem angestrebten Porendurchmesser entspricht, sowie mit Oxidationsmitteln vermischt, unter Zugabe von Flüssigkeit bei Raumtemperatur geknetet, in eine vorgegebene Form eingepreßt, unterhalb 100 °C vorgetrocknet, die Kunststoffkugeln in einer ersten Anheizstufe zur Bildung offener Poren vollständig verbrannt und das sinterfähige Pulver unter Beibehaltung der ursprünglichen Form und der offenen Poren in einer zweiten Temperstufe zusammengesintert werden.

Vorzugsweise werden als Kunststoffkugeln Polystyrolkugeln und als Oxidationsmittel $H_2O_2$ verwendet.

Weiterhin ist es vorteilhaft, einen Katalysator, wie $MnO_2$, beizumischen, der in einer Menge ≤ 0,1 % zugesetzt wird.

Am einfachsten läßt sich nach diesem Verfahren poröses Glas herstellen, da Glas bereits bei relativ niedrigen Temperaturen zusammensintert, ohne daß die entstehenden Poren sich schließen. Poröse Formkörper aus gesintertem Glas besitzen im wesentlichen die physikalischen und chemischen Eigenschaften des Ausgangsglases. Es ist jedoch auch möglich, daß Gläser, die zur Entmischung neigen, im entmischten Zustand vorliegen und somit die Eigenschaften des entmischten Ausgangsglases aufweisen.

Der nach diesem Verfahren hergestellte Formkörper weist folgende Merkmale auf : das poröse, gesinterte Material ist ein Glas und/oder ein kristallines Glaslot und/oder eine Glaskeramik, mehr als 90 % der Poren des Formkörpers sind offene Poren, die Porenverteilung ist isotrop und der Formkörper weist zusätzlich gezielt eingebrachte Hohlräume in Form von großen Poren auf, die um einen Faktor von mindestens 10 größer sind als die kleinen Poren.

Unter offenen Poren wird hier verstanden, daß die Poren untereinander und mit der Außenluft in Verbindung stehen. Solche Körper können beispielsweise in ein Vakuum gebracht werden, ohne daß eine Längenänderung auftritt.

Ein weiteres Merkmal der erfindungsgemäßen Formkörper besteht darin, daß die Poren einen definierten Durchmesser besitzen und vollkommen isotrop verteilt sind. Unter isotroper Porenverteilung wird verstanden, daß die Porenverteilung in allen Richtungen gleich ist. Dies bedeutet, daß der Formkörper in allen Richtungen die gleichen Eigenschaften, wie z.B. Festigkeiten, besitzt. Der Durchmesser der Poren kann überall gleich sein, z.B. 2 oder 4 mm. Der Formkörper kann jedoch auch Poren mit zwei vorgegebenen Durchmessern, z.B. 2 und 4 mm, aufweisen. Auch das Verhältnis der kleineren zu den größeren Poren kann verschieden sein, z.B. 20 % 2 mm-Poren und 80 % 4 mm-Poren. Im allgemeinen ist dieses Verhältnis überall im Formkörper gleich.

Gewünschtenfalls kann aber auch innerhalb des Körpers ein gezielter Übergang von Porengrößen erfolgen.

Ein weiteres Merkmal des erfindungsgemäßen Produkts ist seine geringe Dichte von $< 1$ g/cm³. Da die Festigkeit solcher poröser Formkörper sehr stark von deren Dichte abhängt, muß zwischen diesen beiden Größen je nach Einsatzgebiet ein Kompromiß gefunden werden. Aufgrund der sehr guten Porenverteilung besitzen noch Körper mit Dichten von $< 0,5$ g/cm³ ausreichend hohe Festigkeiten für die Handhabung. Für spezielle Anwendungen, wie z.B. als Trägermaterial für Astrospiegel, die in den Weltraum befördert werden müssen, sind Dichten von $< 0,3$ g/cm³ erforderlich.

Der neue Formkörper besteht somit aus einer gesinterten glasigen und/oder glasig-kristallinen Masse ; er kann somit ein Glas, ein kristallisiertes Glaslot, eine Glaskeramik oder ein Gemisch dieser Stoffe sein.

Enthält der erfindungsgemäße poröse Formkörper eine Glaskeramik, dann vorzugsweise eine solche, die Hochquarzmischkristalle aufweist. Die Eigenschaften dieser Körper werden durch die Menge und Zusammensetzung der Restglasphase und Kristallphase der Glaskeramik bestimmt. Formkörper aus Glaskeramiken mit Hochquarzmischkristallen können lineare Wärmeausdehnungen von $< 1 \times 10^{-6}$ K⁻¹ besitzen.

Wie bereits erwähnt, kann der erfindungsgemäße poröse Formkörper auch ein kristallisiertes Glaslot enthalten. Ein kristallisierendes Glaslot behält bis zur Löttemperatur seinen glasigen Charakter bei und scheidet bei der Löttemperatur Kristalle aus. Vorzugsweise besteht der Formkörper aus einem kristallisierten Glaslot, das als Kristallphase überwiegend Hochquarzmischkristalle enthält. Auch bei diesen Formkörpern werden eine Reihe von Eigenschaften von der Menge und Zusammensetzung der Restglasphase und der Kristallphase des kristallisierten Glaslotes bestimmt. Auch hier können Werte von $< 1 \times 10^{-6}$ K⁻¹ erhalten werden.

Die Erfindung schließt auch poröse Formkörper ein, die aus einer Mischung von mehreren Stoffen der Gruppe : Gläser, kristallisierte Glaslote, Glaskeramiken besteht.

So weisen beispielsweise Formkörper aus Glaskeramik und kristallisiertem Glaslot oder aus Glaskeramik und Glas niedriger Wärmeausdehnung Wärmeausdehnungen von $0 \pm 0,1 \times 10^{-6}$ K⁻¹ auf. In diesen Formkörpern enthalten die Glaskeramiken und die kristallisierenden Glaslote Hochquarzmischkristalle. Das kristallisierte Glaslot bzw. das Glas, die nur in geringeren Mengen von $\leq 25$ % enthalten sind, bewirken den Zusammenhalt der Glaskeramikteilchen. Dies ist deshalb wichtig, weil der Sinterprozeß zur Herstellung dieser Formkörper mit niedriger Wärmeausdehnung unterhalb 900 °C stattfinden muß.

Bei Verwendung von Pulver aus leicht kristallisierendem Glas oder leicht kristallisierendem Glas mit Keimbildner steht der Sinterprozeß in Konkurrenz zum Kristallisationsprozeß. Bei sonst gleicher Zusammensetzung und gleicher Aufheizgeschwindigkeit kristallisieren Gläser mit Keimbildner früher als Gläser ohne Keimbildner. Der Unterschied wird jedoch umso geringer, je langsamer die Aufheizung erfolgt. Beide Glasarten sintern umso besser zusammen, je rascher der Aufheizprozeß abläuft. Der Aufheizgeschwindigkeit sind jedoch Grenzen gesetzt, da zum einen die organische Substanz ausbrennen muß und zum anderen bei der Kristallisation eine Schrumpfung stattfindet, die sich umso stärker bemerkbar macht, je rascher die Aufheizung erfolgt und je größer die Dimensionen des Schaumkörpers sind.

Die Schwierigkeiten der Schrumpfung treten bei dem Pulver aus kristallisierter Glaskeramik nicht auf, wenn beim Aufheizen und Sintern keine Strukturumwandlungen, wie Umkristallisation und Abgabe von Kristallwasser erfolgen.

3

Für die Herstellung von poröser Glaskeramik mit geringer Wärmeausdehnung, vorzugsweise um Null, muß von einer Glaskeramik mit Hochquarzmischkristallen ausgegangen werden. Da die Umwandlung von Hochquarzmischkristall in Spodumen bereits oberhalb 800 °C beginnt, muß in diesem Falle die Sintertemperatur unterhalb 850 °C, vorzugsweise unterhalb 800 °C, liegen. Versuche haben gezeigt, daß bei kristallisierter Glaskeramik mit einer Wärmeausdehnung um Null bei einer Temperung kaum eine Sinterung stattfindet und daher unterhalb 850 °C keine guten mechanischen Festigkeiten bei geringen Dichten zu erhalten sind.

Diese Schwierigkeiten können erfindungsgemäß umgangen werden, wenn dem kristallinen Pulver ein gewisser Anteil an Glaspulver beigegeben wird. Das zugemischte Glaspulver hat die Aufgabe, die Verbindung zwischen den kristallinen Körpern herzustellen. Die mechanische Festigkeit der porösen Körper ist abhängig vom Anteil an Glaspulver, von der Körnung des Glaspulvers und der Anpassung des Glaspulvers an das kristalline Pulver bezüglich der Wärmedehnung.

Für eine poröse Glaskeramik mit niedriger Wärmeausdehnung muß der Anteil an Glaspulver möglichst niedrig gehalten werden, da die Wärmeausdehnung des Glaspulvers in diesem Fall höher liegt als die Wärmeausdehnung des kristallinen Pulvers. Die Wärmeausdehnung der porösen Glaskeramik setzt sich in etwa additiv aus den Einzelkomponenten zusammen. Zur Kompensation der positiven Wärmeausdehnung des Glaspulvers muß daher ein Teil des kristallinen Pulvers eine negative Wärmeausdehnung aufweisen. Das kristalline Pulver mit negativer Wärmeausdehnung kann sowohl eine Glaskeramik als auch ein Mineral, wie z.B. Eukryptit, sein.

Anstelle von Glaspulver bzw. Glaslot kann auch kristallisierendes Glaslot eingesetzt werden. Das kristallisierende Glaslot hat den Vorteil, daß es bei relativ niedriger Temperatur eine Verbindung zwischen den kristallinen Teilchen herstellt und, nachdem es selbst kristallisiert ist, eine niedrige Wärmeausdehnung aufweist. Aufgrund der niedrigen Wärmeausdehnung kann der Anteil an Glaspulver und damit die mechanische Festigkeit der porösen Glaskeramik erhöht werden.

Eine Vorteil des Verfahrens liegt darin, daß die Größe der Poren und deren Verteilung sehr exakt vorgegeben werden können. Die Größe der aufgeschäumten Kunststoffkugeln bestimmt die Porengröße und die Größe der zusätzlichen Hohlräume. Es ist somit möglich, gleich große Poren oder Poren unterschiedlicher Größe in vorgegebenem Verhältnis zu erzeugen.

Erfindungsgemäß können Dichten von $\leq 0,5$ g/cm$^3$ durch das Verhältnis des Gewichts des sinterfähigen Pulvers zum Volumen des aufgeschäumten Kunststoffes recht genau eingestellt werden.

Der Vorteil des aufgeblähten Kunststoffes besteht darin, daß zur Erzeugung der Poren eine relativ kleine Menge an organischer Substanz benötigt wird. Für die Erzeugung einer hohen mechanischen Festigkeit ist es wichtig, daß die organischen Bestandteile während des Aufheizprozesses und Sinterprozesses möglichst vollständig verbrannt werden. Die Verbrennungsgase der organischen Substanz erzeugen die offenen Poren. Der Sinterprozeß darf daher nicht bei Temperaturen stattfinden, bei denen die Poren während des Sinterns wieder geschlossen werden.

Die Flüssigkeit, die erfindungsgemäß zugegeben wird, hat im wesentlichen zwei Aufgaben : Zum einen soll sie für eine gleichmäßige Verteilung zwischen dem sinterfähigen Pulver und der organischen Substanz sorgen, und zum anderen soll sie die vollständige Verbrennung der organischen Substanz beschleunigen. Reines Wasser hat sich als Flüssigkeit nicht bewährt, da sich das sinterfähige Pulver zu leicht absetzt. Dagegen hat sich die Zugabe von solchen Flüssigkeiten als vorteilhaft erwiesen, die sowohl eine hydrophile als auch eine hydrophobe Gruppe besitzen, wie z.B. Glycerin. Durch diese Flüssigkeiten wird nicht nur die Haftung des Pulvers am aufgeschäumten Kunststoff, verbessert, sondern auch das Gleitvermögen beim Mischen und Kneten wesentlich erhöht. Günstig auf die Haftung und das Gleitvermögen wirken auch kleine Mengen an Schwefelsäure und Ammoniumsulfat $(NH_4)_2SO_4$.

Versuche haben ergeben, daß durch Zugabe von einem Oxidationsmittel wie z.B. $H_2O_2$ zur Flüssigkeit die Verbrennung der organischen Substanz rascher und vollständiger abläuft. Hierbei wirken Katalysatoren, die den Sauerstoff des $H_2O_2$ freisetzen, beschleunigend. Als Katalysator hat sich z.B. $MnO_2$ in Mengen von $\leq 0,1$ Gew.-% bewährt.

Die Dichte und die Festigkeit der porösen Körper ist auch abhängig von der Korngröße des sinterfähigen Pulvers. Die Korngröße sollte $< 200$ µm sein. Für Dichten unter 0,5 g/cm$^3$ sollte die Korngröße vorzugsweise $< 20$ µm betragen. Wird dem kristallinen Pulver zur besseren Versinterung bzw. zur Verlötung Glaslot oder kristallisierendes Glaslot zugegeben, dann sollte die Körnung dieses Glaslotes $< 20$ µm, vorzugsweise $< 5$ µm, betragen.

Um eine möglichst homogene Mischung zu erhalten, wird zuerst das sinterfähige Pulver mit eventuellen Zusätzen, wie Glaslot und $(NH_4)_2SO_4$ gut durchmischt. Anschließend wird das sinterfähige Pulver mit dem aufgeschäumten Kunststoff, unter langsamer Zugabe der Flüssigkeit gemischt. Die homogene Masse wird danach in eine Form z.B. aus Keramik, gegeben. Um die Bildung von kleinen Zwischenräumen zu vermeiden, wird die Masse fest eingestampft.

Je nach Größe des Sinterkörpers muß die Masse längere Zeit bei Raumtemperatur gehalten werden, damit das zugegebene Wasser langsam verdunsten kann. Es hat sich als vorteilhaft erwiesen, die Oberfläche mit einem glyceringetränkten Tuch abzudecken. Nach dem Vortrocknen bei Raumtemperatur kann die äußere Form bereits entfernt werden.

Die Aufheizung erfolgt in mindestens 2 Stufen.

In der ersten Stufe erfolgt das Ausbrennen der aufgeschäumten Kunststoffkugeln und die Bildung der offenen Poren und zusätzlichen Hohlräume.

In der zweiten Stufe kann eine Keimbildung bei glasigen Glaskeramiken oder kristallisierenden Glasloten erfolgen.

Die dritte Aufheizstufe dient zur Sinterung unter Beibehaltung der offenen Poren und der äußeren Form.

Die Kristallisation einer glasigen Glaskeramik oder eines kristallisierenden Glaslots sollte während der Sinterung oder im Anschluß daran stattfinden.

Die Aufheizgeschwindigkeit hängt sowohl von der Große des porösen Körpers als auch von der Art des verwendeten sinterfähigen Pulvers ab. Während des Aufheizprozesses darf innerhalb des porösen Körpers keine allzu größe Temperaturdifferenz entstehen. Diese Temperaturdifferenz sollte besonders im Temperaturgebiet der Sinterung möglich sein.

Bei der Verwendung von Glaspulver oder bei Zusatz von Glaspulver bzw. Glaslot zu kristallinem Pulver kann die Aufheizung sehr langsam erfolgen. Dagegen erfordert die Verwendung von leicht kristallisierendem Glaspulver oder von leicht kristallisierendem Glaspulver mit Keimbildner eine bestimmte Aufheizgeschwindigkeit, die nicht unterschritten werden darf. Durch diese Aufheizgeschwindigkeit wird indirekt auch die Größe des porösen Körpers vorgegeben und zwar wegen der auftretenden tolerierbaren Temperaturdifferenz im porösen Körper während des Aufheizens. Bei Einsatz von kristallisierendem Glaslot muß das Temperprogramm (Keimbildung und Kristallisation) für dieses kristallisierende Glaslot eingehalten werden.

Die Vorteile des erfindungsgemäßen Verfahrens zur Herstellung von porösem Glas, poröser Glaskeramik bestehen darin, daß gleichzeitig geringe Dichte und Offenporigkeit erzielt werden. Darüber hinaus wird eine gleichmäßige Porenverteilung mit genau festlegbaren Porendurchmessern erreicht. Das Verfahren ist sehr flexibel hinsichtlich der zu erzielenden Eigenschaften und der Gestalt der porösen Körper. So lassen sich beim Einsatz eines geeigneten sinterfähigen Pulvers poröse Glaskeramiken herstellen mit linearer Wärmeausdehnung um Null.

Die folgenden Beispiele sollen dazu dienen, das erfindungsgemäße Verfahren näher zu erläutern.

## Beispiel 1

In einem Mischer werden 135 g Zerodurpulver der Körnung < 60 $\mu$m, 15 g Duranpulver der Körnung < 20 $\mu$m und 10 g Ammoniumsulfat gemischt. (Zerodur ist eine im Handel erhältliche Glaskeramik mit einer linearen Wärmeausdehnung um Null ; Duran ist das bekannte Borosilikatglas für Laborgläser). Dieses sinterfähige Pulver wird mit 10 g Styropor P 401 (Polystyrol) als Schaumkunststoff unter Zugabe von 44 ml Flüssigkeit gemischt und geknetet. Die Flüssigkeit besteht aus 12 ml Perhydrol (30 %), 12 ml Glycerin (87 %) und 20 ml Wasser. Die geknetete Masse wird in eine Form gegeben und 20 h bei 75 °C getrocknet. Nach dem Trocknen wird die Form entfernt und der Körper mit 2 K/min auf 850 °C aufgeheizt und 2 h bei dieser Temperatur belassen, bevor er wieder abgekühlt wird.

Bei vollkommen gleichmäßiger Porenverteilung besitzt der poröse Glaskeramikkörper eine Dichte von 0,32 g/cm³, einen E-Modul von 340 N/mm² und einen Druckfestigkeit von 0,24 N/mm² und einen Anteil an offenen Poren von > 90 %.

Eine zweite Probe mit 540 g Zerodur < 20 $\mu$m, 60 g Duran < 20 $\mu$m, 40 g $(NH_4)_2SO_4$, 60 ml $H_2O_2$ (30 %), 75 ml Glycerin (87 %), 150 ml $H_2O$ und 50 g Styropor P 401 wurde wie die erste Probe gemischt, getrocknet und getempert.

Die Dichte der Probe war 0,25 g/cm³, der E-Modul 230 N/mm² und die Druckfestigkeit 0,23 N/mm² und der Anteil an offenen Poren > 99 %.

Durch die feinere Körnung von Zerodur war es möglich, die Dichte von 0,32 auf 0,25 g/cm³ zu reduzieren ohne wesentliche Verminderung der Druckfestigkeit.

## Beispiel 2

In der Tabelle 1 sind Beispiele für verschiedene sinterfähige Pulver zusammengestellt. Die Zusammensetzung von Gleitmittel, Oxidationsmittel, Schaumkunststoff und Flüssigkeit ist unverändert. Unter Nr. 1 wird ein poröses offenporiges Glas aus dem Glaspulver Duran mit Körnung < 60 $\mu$m hergestellt. Die Nummern 2, 3, 4 und 5 führen zu porösen Glaskeramiken. Pulver aus kristallisierter Glaskeramik läßt sich bei Temperaturen unterhalb 850 °C nicht sintern. Ihm muß daher als Additiv Glaspulver (Nr. 2), Glaslot oder kristallisierendes Glaslot beigegeben werden.

Mit sinterfähigem Pulver aus Glaskeramik (Zerodur), die noch nich keramisiert ist (Nr. 3), können durch rasches Aufheizen kleine poröse Glaskeramikkörper hergestellt werden. Das gleiche gilt für leicht zur Oberflächenkristallisation neigendes sinterfähiges Pulver. Ein solches Pulver ist z. B. ein Glaspulver mit der Zusammensetzung von Zerodur, aber ohne die Keimbildner $TiO_2$ und $ZrO_2$ (Nr. 4).

Zur Einstellung der Wärmeausdehnung kann dem sinterfähigen Pulver auch eine Glaskeramik oder ein Mineral (Eukryptit) mit negativer Wärmeausdehnung zugegeben werden (Nr. 5). Eukryptit läßt sich wie keramisierte Glaskeramik bei Temperaturen < 850 °C nicht zusammensintern (Nr. 6).

## Beispiel 3

Der Einfluß der verschiedenen Gleit- und Oxidationsmittelzusätze geht aus Tabelle 2 hervor. Die Mischung, Trocknung und Temperung erfolgte wie in Beispiel 1 beschrieben. Bei Abwesenheit der Oxidationsmittel verbrennt die organische Substanz (Styropor P 401) nur unvollständig. Die Schichten mit Resten anorganischer Substanz krümeln leicht.

## Beispiel 4

Der Einfluß des Schaumstoffs (Styropor) geht aus Tabelle 3 hervor. Die Größe der Kunststoffkugeln hat nur einen geringen Einfluß auf die Dichte (Nr. 1, 2 und 3). Die geringste Dichte wurde mit der Größe P 401 (Nr. 2) erzielt. Durch Mischen verschiedener Kugelgrößen (Nr. 4, 5 und 8) läßt sich die Dichte etwas verringern.

Sehr stark abhängig ist jedoch die Dichte von der zugegebenen Menge an Kunststoff (Nr. 2, 6 und 7).

(Siehe Tabelle 1 Seite 7 f.)

Zusammenstellung von sinterfähigem Pulver (Körnung ≤ 60 μm)   Tabelle 1

| Lfd. Nr. | Zusammensetzung — Sinterfähiges Pulver | Gleit- org. | Oxidationsm. porenbild. Subst. | Temperprogramm | Dichte $(g/cm^3)$ | Druckfestigkeit $(N/mm^2)$ | E-Modul $(N/mm^2)$ | $\alpha_{100} \times 10^7$ $[K^{-1}]$ |
|---|---|---|---|---|---|---|---|---|
| 1 | 100 % Duran50 | 7 g | Ammoniumsulfat | $100\ ^oC \xrightarrow{0,5-10\ ^oC/'} 770\ ^oC, 1h$ | 0,33 | n.b. | n.b. | n.b. |
|  |  | 8 g | Glycerin (87 %) |  |  |  |  |  |
|  |  | 10,0 g | Perhydrol (30 %) |  |  |  |  |  |
|  |  | 0,01 g | Mangandioxid |  |  |  |  |  |
|  |  | 20-30 g | Wasser |  |  |  |  |  |
|  |  | 4,8 g | Styropor P 401 (BASF), doppelt geschäumt |  |  |  |  |  |
| 2 | 90 % Zerodur+) 10 % Duran50 | " |  | $100\ ^oC \xrightarrow{0,5-10\ ^oC/'} 850\ ^oC, 2h$ | 0,26 | 0,24 (Zugfest. nach PE-Methode 0,58) | 250 | 3 – 5 |
| 3 | 100 % Zerodur nicht kera- misiert | " |  | $100\ ^oC \xrightarrow{10-20\ ^oC/'} 850\ ^oC, 2h$ | 0,35 | 0,5 | n.b. | n.b. |
| 4 | 100 % Zerodur o. Keimbildner nicht keram. | " |  | $100\ ^oC \xrightarrow{10-20\ ^oC/'} 850\ ^oC, 2h$ | 0,34 | 2 – 8 | 700 | n.b. $(\alpha_{300}=0,2 \times 10^7$ bei $800\ ^oC, 24h)$ |
| 5 | 88 % Zerodur 2 % Eukryptit 10 % Duran 50 | " |  | $100\ ^oC \xrightarrow{0,5-10\ ^oC/'} 850\ ^oC, 2h$ | 0,27 | 0,30 | n.b. | n.b. |
| 6 | 100 % Eukryp- tit | " |  | $100\ ^oC \xrightarrow{10-20\ ^oC/'} 990\ ^oC, 2h$ | 0,25 | sehr schwach nicht meßbar | n.b. | n.b. |
| 7 | 80 % Eukryptit 20 % Duran 50 | " |  | $100\ ^oC \xrightarrow{0,5-10\ ^oC/'} 850\ ^oC, 2h$ | 0,23 | 0,1 | n.b. | n.b. |
| 8 | 80 % Zerodur+) 20 % krist. Glaslot | " |  | $100\ ^oC \xrightarrow{0,5-10\ ^oC/'} 850\ ^oC, 2h$ | 0,23++) | 0,38++) | 234++) | + 2,0 |
| 9 | 80 % Zerodur+) 20 % krist. Glaslot | " |  | $100\ ^oC \xrightarrow{0,25\ ^oC/'} 850\ ^oC, 2h$ | 0,21 | 0,13 | 164 | +15,5 |

+) Der Anteil an offenen Poren beträgt 99,8 %        ++) Die Isotropie der Eigenschaften wird in Tabelle 1a gezeigt.

**0 070 849**

Tabelle 1a

Eigenschaftswerte der Zusammensetzung 8 in drei Richtungen

| Probe | Richtung | Meßwerte | | |
| | | Dichte [g/cm$^3$] | E-Modul [N/mm$^2$] | Druckfestigkeit [N/mm$^2$] |
|---|---|---|---|---|
| 1 | x | 0,24 | 230 | 0,44 |
| | y | 0,24 | 224 | 0,42 |
| | z | 0,24 | 201 | 0,39 |
| 2 | x | 0,26 | 323 | 0,56 |
| | y | 0,26 | 353 | 0,65 |
| | z | 0,26 | 363 | 0,55 |
| 3 | x | 0,21 | 311 | 0,50 |
| | y | 0,21 | 329 | 0,50 |
| | z | 0,21 | 300 | 0,50 |

Die Schwankungen der Meßwerte liegen innerhalb der Meßgenauigkeit.

(Siehe Tabellen Seite 9 ff.)

Tabelle 2

Einfluß verschiedener Gleit- und Oxidationsmittelzusätze

| Lfd. Nr. | sinterfähiges Pulver Gew.% | Gleitmittel, Oxidationsmittel | | | | | | organische Substanz | Eigenschaften | | |
|---|---|---|---|---|---|---|---|---|---|---|---|
| | | Glycerin (87%) ml/100g | Zucker g/100g | Ammon-sulfat g/100g | Mangan-dioxid g/100g | Perhydrol (30%) ml/100g | Wasser ml/100g | g/100g | Dichte (g/cm$^3$) | Druck-Festigk. (N/mm$^2$) | |
| 1 | 80 % Zerodur 20 % Duran | – | – | 7 | 0,01 | 10 | ~30 | 8 | 0,25 | 0,33 | |
| 2 | 80 % Zerodur 20 % Duran | 10 | – | 7 | 0,01 | 10 | ~30 | 8 | 0,27 | 0,30 | |
| 3 | 80 % Zerodur 20 % Duran | – | 5 | 7 | 0,01 | 10 | ~30 | 8 | 0,23 | 0,21 | neigt zu Rißbildung |
| 4 | 80 % Zerodur 20 % Duran | 10 | – | – | 0,01 | 10 | ~30 | 8 | 0,25 | 0,10 | neigt zu Schichtenbildg. u. krümelt |
| 5 | 80 % Zerodur 20 % Duran | 10 | – | 7 | – | 10 | ~30 | 8 | 0,27 | 0,10 | neigt zu Schichtenbildg., nicht alle Poren geöffnet |
| 6 | 80 % Zerodur 20 % Duran | 10 | – | 7 | – | – | ~30 | 8 | 0,28 | x | neigt zu Schichtenbildg., nicht alle Poren geöffnet |
| 7 | 80 % Zerodur 20 % Duran | 10 | – | 7 | 0,01 | – | ~30 | 8 | 0,28 | x | Porenverbindg. besteht, org. Subst. n. völlig verbrannt |
| 8 | 80 % Zerodur 20 % Duran | – | – | – | – | – | 40 | 8 | 0,37 | x | Pulver setzt sich in ca. 1 cm dicker Schicht ab, viele Poren geschlossen |

x = keine einheitliche Festigkeit ; Schichten mit Resten organischer Substanz krümeln leicht

**Tabelle 3**

Einfluß der organischen Substanzen (Styropor)

| Lfd. Nr. | sinterfähiges Pulver Gew. % | Gleitmittel, Oxidationsmittel g/100 g Pulver | organische Substanz (Kugelgröße*) g/100 g Pulver- Kugelgröße | Eigenschaften |
|---|---|---|---|---|
| 1 | 90 % Zerodur 10 % Duran | 7 g Ammoniumsulfat 8 g Glycerin (87 %) 10 g Perhydrol (30 %) 0,01 g Mangandioxid 20-30 g Wasser | 5 g P 501 | Dichte: 0,31 g/cm$^3$ Druckfestigkeit: 0,30 N/mm$^2$ |
| 2 | 90 % Zerodur 10 % Duran | " | 5 g P.401 | Dichte: 0,28 g/cm$^3$ Druckfestigkeit: 0,30 N/mm$^2$ |
| 3 | 90 % Zerodur 10 % Duran | " | 5 g P 301 | Dichte: 0,30 g/cm$^3$ |
| 4 | 90 % Zerodur 10 % Duran | " | 2,5 g P 501 2,5 g P 301 | Dichte: 0,28 g/cm$^3$ |
| 5 | 90 % Zerodur 10 % Duran | " | 4 g P 401 1 g P 301 | Dichte: 0,26 g/cm$^3$ Druckfestigkeit: 0,24 N/mm$^2$ |
| 6 | 90 % Zerodur 10 % Duran | " | 7 g P 401 | Dichte: 0,24 g/cm$^3$ |
| 7 | 90 % Zerodur 10 % Duran | " | 3 g P 401 | Dichte: 0,42 g/cm$^3$ |
| 8 | 90 % Zerodur 10 % Duran | " | 6 g P 401 1 g P 301 | Dichte: 0,22 g/cm$^3$ |

*) = P 501 - Kugelgröße nach dem Aufschäumen ⌀ 0,4-1,5 mm
  = P 401 - Kugelgröße nach dem Aufschäumen ⌀ 1,5-2,0 mm
  = P 301 - Kugelgröße nach dem Aufschäumen ⌀ 2,0-3,0 mm

**Patentansprüche**

1. Verfahren zur Herstellung von porösem Glas und/oder poröser Glaskeramik mit offenen Poren, die mehr als 90 % der Poren betragen, und mit einer Dichte < 1,0 g/cm³, dadurch gekennzeichnet, daß feingemahlenes sinterfähiges Pulver aus gemahlenem Glas, leicht kristallisierendem Keimbildner enthaltenden Glas, keramisierter Glaskeramik oder Mischungen dieser Stoffe, mit aufgeschäumten Kunststoffkugeln, deren Durchmesser dem angestrebten Porendurchmesser entspricht, sowie mit Oxidationsmitteln vermischt, unter Zugabe von Flüssigkeit bei Raumtemperatur geknetet, in eine vorgegebene Form eingepreßt, unterhalb 100 °C vorgetrocknet, die Kunststoffkugeln in einer ersten Anheizstufe zur Bildung offener Poren vollständig verbrannt und das sinterfähige Pulver unter Beibehaltung der ursprünglichen Form und der offenen Poren in einer zweiten Temperstufe zusammengesintert werden.

2. Verfahren nach Anspruch 1, dadurch gekennzeichnet, daß diese Kunststoffkugeln aus Polystyrol bestehen.

3. Verfahren nach Anspruch 1, dadurch gekennzeichnet, daß als dieses Oxidationsmittel $H_2O_2$ verwendet wird.

4. Verfahren nach Anspruch 1, dadurch gekennzeichnet, daß ein Katalysator zugemischt wird.

5. Verfahren nach Anspruch 4, dadurch gekennzeichnet, daß als dieser Katalysator $MnO_2$ verwendet und in einer Menge $\leqslant$ 0,1 % zugesetzt wird.

6. Verfahren nach einem der Ansprüche 1 bis 5, dadurch gekennzeichnet, daß dem sinterfähigen Pulver zur Erniedrigung der Sintertemperatur niedrig schmelzendes Glaslot und/oder niedrig schmelzendes kristallisierendes Glaslot beigemischt werden.

7. Verfahren nach Anspruch 6, dadurch gekennzeichnet, daß zur Herstellung von poröser Glaskeramik mit niedriger linearer Wärmeausdehnung, vorzugsweise um Null, ein sinterfähiges Pulver aus leicht kristallisierendem Glas, leicht kristallisierendem Glas mit Keimbildner, keramisierter Glaskeramik oder Mischungen dieser Stoffe verwendet wird, dessen Zusammensetzung so gewählt ist, daß es Kristalle der Hochquarzmischkristall-Familie vor oder während des Sinterprozesses bildet, bereits enthält oder vollständig daraus aufgebaut ist.

8. Verfahren nach Anspruch 6, dadurch gekennzeichnet, daß ein Glaslot, welches eine niedrige Wärmeausdehnung besitzt, bzw. ein kristallisierendes Glaslot, welches beim Sintern eine niedrige Wärmeausdehnung annimmt, verwendet wird.

9. Verfahren nach einem der Ansprüche 1 bis 5, dadurch gekennzeichnet, daß ein sinterfähiges Pulver mit einer Körnung von $\leqslant$ 200 µm, vorzugsweise $\leqslant$ 60 µm verwendet wird.

10. Verfahren nach einem der Ansprüche 1 bis 5, dadurch gekennzeichnet, daß als diese Flüssigkeit Wasser oder wässrige Lösungen verwendet werden.

11. Verfahren nach einem der Ansprüche 1 bis 5, dadurch gekennzeichnet, daß dem Gemisch Substanzen zur Verbesserung der Gleit- und Knetfähigkeit, wie z. B. Glycerin und/oder Schwefelsäure und/oder $(NH_4)_2SO_4$ zugegeben werden.

12. Verfahren nach einem der Ansprüche 1 bis 5, dadurch gekennzeichnet, daß zur Erzielung von porösen Körpern mit Dichten $\leqslant$ 0,50 g/cm³, vorzugsweise $\leqslant$ 0,3 g/cm³ das Verhältnis des Gewichts des sinterfähigen Pulvers zum Volumen der Kunststoffkugeln $\leqslant$ 0,5, vorzugsweise $\leqslant$ 0,2 g/cm³ gewählt wird.

13. Formkörper aus porösem, gesintertem glasigem und/oder glasig-kristallinem Material mit einer Dichte $\leqslant$ 1,0 g/cm³, hergestellt nach dem Verfahren gemäß Anspruch 1, der die folgenden Merkmale aufweist :
— das poröse, gesinterte Material ist ein Glas und/oder ein kristallines Glaslot und/oder eine Glaskeramik,
— mehr als 90 % der Poren des Formkörpers sind offene Poren,
— die Porenverteilung ist isotrop,
— der Formkörper weist zusätzlich gezielt eingebrachte Hohlräume in Form von großen Poren auf, die um einen Faktor von mindestens 10 größer sind als die kleinen Poren.

14. Formkörper nach Anspruch 13, gekennzeichnet durch folgendes Merkmal : die Dichte des Formkörpers beträgt $\leqslant$ 0,3 g/cm³.

15. Formkörper nach einem der Ansprüche 13 oder 14, gekennzeichnet durch folgendes Merkmal : die Gesamtzahl der Poren setzt sich zusammen aus gleichmäßig verteilten Poren zweier oder mehrerer unterschiedlicher Größen.

16. Formkörper nach Anspruch 13, gekennzeichnet durch folgendes Merkmal : die kristalline Phase des kristallisierten Glaslots oder der Glaskeramik besteht im wesentlichen aus Hochquarz-Mischkristallen.

17. Formkörper nach Anspruch 13, gekennzeichnet durch folgendes Merkmal : das Mengenverhältnis zwischen Glasphase und Kristallphase und deren Zusammensetzung ist so gewählt, daß der Formkörper einen linearen thermischen Ausdehnungskoeffizienten $\alpha$ 20-300 $\leqslant$ 1 $\times$ 10⁻⁶ K⁻¹ aufweist.

**Claims**

1. Method for preparing porous glass and/or porous glass ceramic having open pores which make out more than 90 % of the pores, and having a density of < 1.0 g/cm³, characterized in that a finely ground powder which is capable to be sintered and comprises ground glass, easily crystallizable glass containing nuclei-forming agents, ceramized glass ceramic, or mixtures of these substances, is intermixed with foamed plastics spheres the diameter of which corresponds to the desired pore diameter, as well as with oxidizing agents, is kneaded at room temperature with the addition of liquid, is pressed into a pre-given mold and is pre-dried below 100 °C, the plastic spheres are completely burnt in a first heat-up step to form open pores and the powder capable to be sintered is sintered together in a second tempering step while maintaining the original shape and the open pores.

2. Method according to claim 1, characterized in that the plastic spheres consist of polystyrene.

3. Method according to claim 1, characterized that $H_2O_2$ is used as the oxidizing agent.

4. Method according to claim 1, characterized in that a catalyst is admixed.

5. Method according to claim 4, characterized in that $MnO_2$ is used a catalyst and is added in an amount of ≤ 0.1 %.

6. Method according to one of the claims 1 to 5, characterized by admixing low-melting glass solder and/or low-melting crystallizing glass solder to the powder capable of being sintered in order to lower the sintering temperature.

7. Method according to claim 6, characterized in that for preparing porous glass ceramic having a low linear heat expansion, particularly around zero, a powder which is capable of being sintered and which consists of easily crystallizable glass containing nuclei-forming agents, ceramized glass ceramic, or mixtures of these substances, is used, the composition of which is selected so that it forms, prior to or during the sintering process, or already contains, or is completely composed of, crystals of the high quartz mixed crystals family.

8. Method according to claim 6, characterized by using a glass solder, which has a low heat expansion or a crystallizing glass solder which attains a low heat expansion upon sintering.

9. Method according to one of the claims 1 to 5, characterized by using a powder capable of being sintered which has a grain size of ≤ 200 μm, preferably ≤ 60 μm.

10. Method according to one of the claims 1 to 5, characterized by using water or aqueous solutions as the liquid.

11. Method according to one of the claims 1 to 5, characterized by adding substances for improving the sliding and kneading capability, like for instance glycerine and/or sulphuric acid and/or $(NH_4)_2SO_4$, to the mixture.

12. Method according to one of the claims 1 to 5, characterized in that for obtaining porous bodies having densities of ≤ 0.50 g/cm³, preferably ≤ 0.3 g/cm³, the ratio of the weight of the powder capable of being sintered to the volume of the plastic spheres is selected to be ≤ 0.5, preferably ≤ 0.2 g/cm³.

13. Shaped body of porous, sintered, glassy and/or glassy-crystalline material having a density of ≤ 1.0 g/cm³, prepared by the method according to claim 1, the shaped body comprising the following features :

— the porous, sintered material is a glass and/or a crystalline glass solder and/oder a glass ceramic,

— more than 90 % of the pores of the shaped body are open pores,

— the pore distribution is isotropic,

— the shaped body additionally comprises wilfully introduced cavities in the form of large pores which are larger than the small pores by a factor of at least 10.

14. Shaped body according to claim 13, characterized by the following feature : the density of the shaped body is ≤ 0.3 g/cm³.

15. Shaped body according to one of the claims 13 or 14, characterized by the following feature : the total number of pores is composed of uniformly distributed pores of two or more different sizes.

16. Shaped body according to claim 13, characterized by the following feature : the crystalline phase of the crystallized glass solder or the glass ceramic consists essentially of high quartz mixed crystals.

17. Shaped body according to claim 13, characterized by the following feature : the amount ratio between glass phase and crystal phase and the composition thereof is selected so that the shaped body has a linear coefficient of thermal expansion $\alpha$ (20-300) ≤ 1 × $10^{-6}$ K$^{-1}$.

## Revendications

1. Procédé pour fabriquer du verre poreux et/ou de la vitrocéramique poreuse à pores ouverts, représentant plus de 90 % des pores, et ayant une masse volumique < 1,0 g/cm³, caractérisé en ce que l'on mélange de la poudre finement broyée, se laissant fritter, obtenue à partir de verre broyé, de verre cristallisant facilement, contenant des agents de nucléation, de vitrocéramique céramisée, ou de mélanges de ces matériaux, avec des billes de matière plastique alvéolaire dont le diamètre correspond au diamètre voulu des pores, ainsi qu'avec des oxydants, on malaxe à la température ordinaire en ajoutant du liquide, on comprime la masse obtenue dans un moule prédéterminé, on produit un préséchage au-dessous de 100 °C, on brûle les billes de matière plastique complètement, dans une première étape de réchauffage, en vue de la formation de pores ouverts, et on produit, dans une deuxième étape de recuit, l'agglomération par frittage de la poudre, avec conservation de la forme originale et des pores ouverts.

2. Procédé selon la revendication 1, caractérisé en ce que les billes de matière plastique sont de polystyrène.

3. Procédé selon la revendication 1, caractérisé en ce que l'on utilise du $H_2O_2$ comme oxydant.

4. Procédé selon la revendication 1, caractérisé en ce que l'on ajoute un catalyseur en mélange.

5. Procédé selon la revendication 4, caractérisé en ce que le catalyseur est du $MnO_2$, que l'on ajoute en quantité $\leqslant 0,1$ %.

6. Procédé selon une des revendications 1 à 5, caractérisé en ce que l'on ajoute en mélange, à la poudre, du verre de soudage à bas point de fusion et/ou du verre de soudage cristallisant, à bas point de fusion, afin d'abaisser la température de frittage.

7. Procédé selon la revendication 6, caractérisé en ce que, pour fabriquer de la vitrocéramique à faible coefficient de dilatation thermique linéaire, de préférence voisin de zéro, on utilise une poudre de verre cristallisant facilement, de verre cristallisant facilement et contenant des agents de nucléation, de vitrocéramique céramisée, ou de mélanges de ces matériaux, dont la composition est choisie de manière qu'elle forme, avant ou pendant le processus de frittage, des cristaux de la famille des solutions solides de quartz de la forme haute, qu'elle contienne déjà de telles solutions, ou qu'elle soit entièrement constituée de telles solutions.

8. Procédé selon la revendication 6, caractérisé en ce que l'on utilise un verre de soudage ayant un faible coefficient de dilatation thermique, ou un verre de soudage cristallisant auquel est conféré un faible coefficient de dilatation thermique lors du frittage.

9. Procédé selon une des revendications 1 à 5, caractérisé en ce que l'on utilise une poudre se laissant fritter, d'une granulométrie $\leqslant 200$ µm, de préférence égale ou inférieure à 60 µm.

10. Procédé selon une des revendications 1 à 5, caractérisé en ce que l'on utilise de l'eau ou des solutions aqueuses comme liquide.

11. Procédé selon une des revendications 1 à 5, caractérisé en ce que l'on ajoute au mélange des substances pour améliorer l'aptitude au glissement et au malaxage, telles que de la glycérine et/ou de l'acide sulfurique et/ou $(NH_4)_2SO_4$.

12. Procédé selon une des revendications 1 à 5, caractérisé en ce que l'on ajuste le rapport du poids de la poudre au volume des billes de matière plastique inférieur ou égal à 0,5, de préférence inférieur ou égal à 0,2 g/cm³, afin d'obtenir des corps poreux de masses volumiques inférieures ou égales à 0,50 g/cm³, de préférence inférieures ou égales à 0,3 g/cm³.

13. Corps moulé d'un matériau poreux, vitreux et/ou vitro-cristallin, fritté, ayant une masse volumique $\leqslant 1,0$ g/cm³, fabriquée selon le procédé de la revendication 1, caractérisé en ce que :
— le matériau poreux fritté est un verre et/ou un verre de soudage cristallin et/ou une vitrocéramique ;
— plus de 90 % des pores du corps moulé sont des pores ouverts ;
— la distribution des pores est isotrope ; et
— le corps moulé présente, en plus, des cavités formées sciemment, sous forme de gros pores, qui sont plus grands d'un facteur 10 au moins que les petits pores.

14. Corps selon la revendication 13, caractérisé en ce que sa masse volumique est inférieure ou égale à 0,3 g/cm³.

15. Corps selon la revendication 13 ou 14, caractérisé en ce que le nombre total des pores est constitué de pores uniformément distribués de deux ou davantage de grosseurs différentes.

16. Corps selon la revendication 13, caractérisé en ce que la phase cristalline du verre de soudage cristallisé ou de la vitrocéramique est constituée essentiellement de solutions solides de quartz de la forme haute.

17. Corps selon la revendication 13, caractérisé en ce que le rapport quantitatif entre la phase vitreuse et la phase cristalline et la composition de ces phases soit choisi de manière que le corps moulé possède un coefficient de dilatation thermique linéaire $\alpha$ 20-300 $\leqslant 1 \times 10^{-6}$ K$^{-1}$.